Europäisches Patentamt

**European Patent Office**

**Office européen des brevets**

(11) Publication number: **0 313 169**
**A1**

## EUROPEAN PATENT APPLICATION

(21) Application number: **88202341.9**

(51) Int. Cl.⁴: **G05D 22/02 , F24F 11/00**

(22) Date of filing: **19.10.88**

(30) Priority: **20.10.87 NL 8702504**

(43) Date of publication of application:
**26.04.89 Bulletin 89/17**

(84) Designated Contracting States:
**AT BE CH DE ES FR GB GR IT LI LU NL SE**

(71) Applicant: **Van Belle, Johannes Gerrit**
**Sabinastraat 11**
**NL-3264 VC Nieuw Beierland(NL)**

(72) Inventor: **Van Belle, Johannes Gerrit**
**Sabinastraat 11**
**NL-3264 VC Nieuw Beierland(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Method for controlling the climate in a building.**

(57) The invention relates to a process for regulating
the air conditioning in a room of a building by means
of an air conditioning appliance which can be
switched on and off. For this, use is made of a
measuring and control device which measures the
inside and outside temperatures and the relative
humidity in the room on the basis of the data stored
in the measuring and control device concerning the
heat conducting properties of cold bridges in the
room, and on the basis of the above-mentioned
measured values the device regulates the appliance
in such a way that no condensation can occur on the
cold bridges.

fig-1

EP 0 313 169 A1

## Method for controlling the climate in a building.

The invention relates to a process for regulating the air conditioning in a room of a building, such as in one or more rooms of a home, office, storeroom and the like, by means of a device which can condition the air in the room(s) in question, and the switching on and off of which is controlled by a sensor which measures the condition in the room and makes the device switch on when a limit value of the condition, for example the relative humidity, is exceeded, and which switches off the device as soon as the condition in question has fallen to a settable value below the above-mentioned limit value.

This process is known, but it has the disadvantage that the air conditioning is not regulated in the optimum way within the room. This is due to the fact that no account is taken of the varying circumstances outside the building, such as external temperature and humidity. These parameters depend greatly on the weather and the seasons. Besides, with this known process insufficient account is taken of the moisture occurring in the room depending on the use of the room.

In a dwelling this is determined by domestic activities such as washing and cooking, and the moisture given off by the residents and any pets and plants. Certain appliances, such as flueless water heaters or stoves with a badly functioning chimney, also make a contribution to the moisture production. It is also important here that the moisture production is not constant during a 24-hour period, but clearly exhibits peaks, for example during cooking.

Moisture problems can occur on account of this imperfect air conditioning in rooms which are ventilated in the known manner. They can take the form of condensation on windows and metal frames, the formation of mould, a damp atmosphere and the like. All this has been further aggravated in recent years by the changes in heating habits for the purpose of saving energy.

In rooms like greenhouses the climate is affected by the moisture production of the plants, the temperature and the supply of water. Here again, the above-mentioned problems can occur if the water supply is not properly regulated.

The object of the invention is therefore to produce a process for regulating the relative humidity which does not have these disadvantages.

This object is achieved according to the invention in that the device is switched on, switched off or adjusted by determining the limit value from:

1. measuring both the inside temperature $(T_1)$ and the outside temperature $(T_o)$;

2. determining the temperature $(T_{k1})$ on the inside of a cold bridge of the room from the inside temperature $(T_1)$, the outside temperature $(T_o)$, and the heat conducting properties of this cold bridge;

3. determining the maximum vapour concentration $(C_{1i})$ at which condensation still only just does not occur at the measured temperature $(T_{k1})$ on the inside of the cold bridge;

4. determining the maximum vapour concentration $(C_{12})$ at which condensation still only just does not occur at the measured inside temperature $(T_1)$;

5. calculating the limit values $(R_{v1})$ for the relative humidity in the room at which no condensation yet forms on the cold bridge by means of the ratio between the maximum vapour concentrations:
$(C_{1i}$ and $(C_{12})$ according to

$$R_{v1} = \frac{C_{11}}{C_{12}}$$

6. and comparing this calculated value for the limit value with the relative humidity measured by the sensor in the room for control of the device.

The maximum relative humidity permissible in the room is now therefore selected in such a way that condensation cannot occur on cold bridges. Such cold bridges occur in living areas such as those mentioned in the form of windows with single glazing or the edge sections in which double glazing panes are fitted. They can also be formed by an entire wall or by the parts of concrete floors and roof which run through the insulated walls and are therefore in contact with the outside air. They each have specific heat conducting properties which together with the outside and inside temperature determine a specific temperate on the inside of the cold bridge. It is therefore preferable for the maximum permissible relative humidity at which condensation just does not yet occur on cold bridges to be geared to the cold bridge which has the lowest temperature on the inside.

The measured values are preferably fed into a microprocessor which controls a fan. The microprocessor is programmed in such a way that on the basis of inside and outside temperature and the heat conducting properties of the critical cold bridge it determines the maximum permissible relative humidity in the room for the purpose of avoiding condensation and compares it with the actual relative humidity there. Depending on the results of this comparison, it switches the fan on or off or controls its speed and/or direction of operation.

The process can also be used for regulating the air conditioning in a number of rooms of a building, by the temperature and the relative humidity being measured in each room and each room also having a fan, the measured values being fed to a central microprocessor which controls each fan separately depending on the temperature and relative humidity measured in the particular room, and on the outside temperature.

Such an embodiment is suitable if different quantities of moisture are produced in different rooms, for example in a bathroom, living room or kitchen.

It may be desirable to use only one fan for several rooms, for example on account of the cost.

This can be achieved according to the invention by measuring the temperature and the relative humidity in each room, while the measured values are always fed to separate microprocessors which are connected to a central microprocessor controlling a fan which is connected to all rooms.

The process according to the invention is not limited to regulation of the air conditioning in living rooms, and can also be used, for example, for greenhouses through the measured values being fed into a microprocessor controlling the regulating device of a water supply unit. In such a unit the water supply is regulated in such a way that the desired relative humidity is maintained through the evaporation from the moisture production of the plants and the direct evaporation of the water supplied.

The invention will now be explained in greater detail with reference to the figures.

Fig. 1 shows a device for carrying out the process.

Fig. 2 shows a device for carrying out the process in the case of several rooms with their own fan.

Fig. 3 shows a device for carrying out the process in the case of several rooms with a central fan.

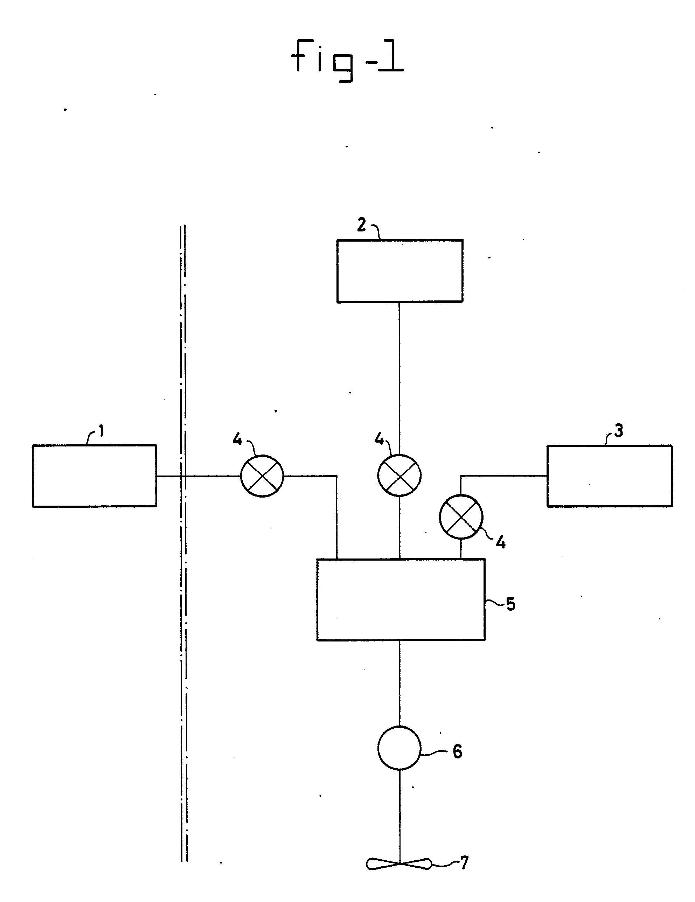

Fig. 1 shows a device for regulating the air conditioning in a room, provided with a sensor 1 for the outside temperature, a sensor 2 for the relative humidity inside, and a sensor 3 for the inside temperature. These sensors 1, 2 and 3 are each connected to a microprocessor 5 via a converter 4, which converts their analogue signal into a digital one. This microprocessor constantly carries out comparisons between the measured temperatures and, on the basis of these and of the standard heat conducting properties of a critical cold bridge fed in, calculates the relative humidity inside within which no condensation yet occurs on that cold bridge. The microprocessor also compares the desired inside relative humidity thus determined with the inside relative humidity actually measured. If the measured relative humidity is higher than the desired relative humidity, the microprocessor delivers a digital signal, which is converted into an analogue signal in the converter 6, so that the fan is switched on. This causes relatively dry outside air to enter, with the result that the relative humidity falls. If it falls below a settable threshold value, the microprocessor delivers a signal for the fan to be switched off.

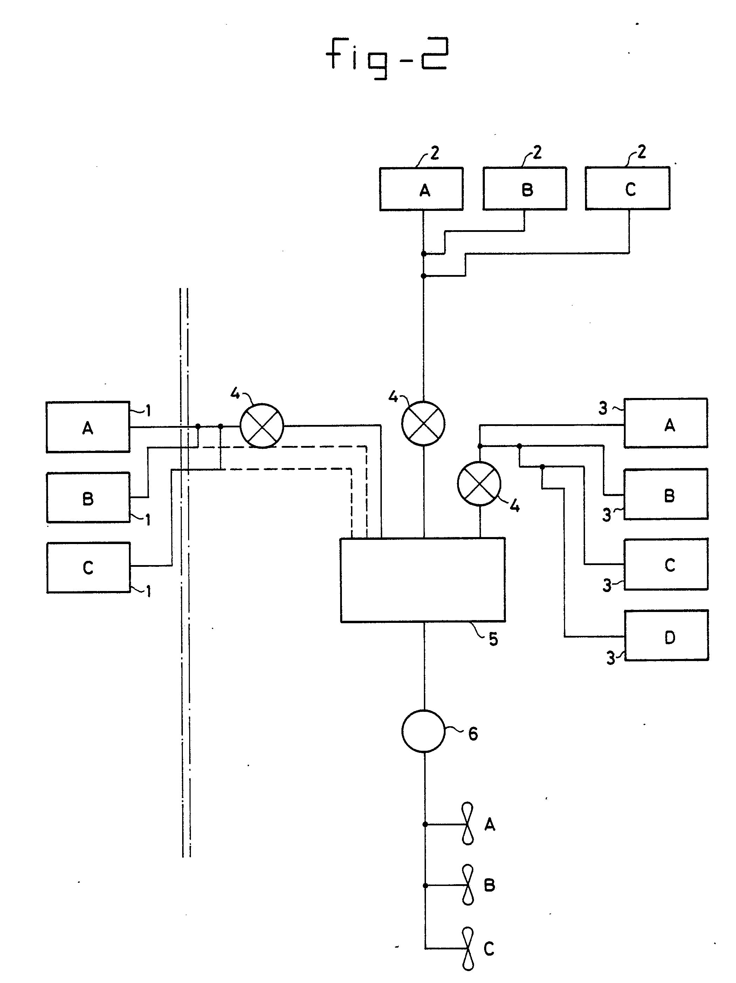

Fig. 2 shows a device for regulating the air conditioning in a number of rooms A, B, C, each with its own fan.

Each room also has its own sensor 3 for measuring the inside temperature, and its own sensor 2 for measuring the relative humidity inside. The appropriate fan is switched on or off depending on the values measured in a particular room. This means that with this device the fan control is based on the moisture production in each individual room and the condensation values on the cold bridges occurring therein.

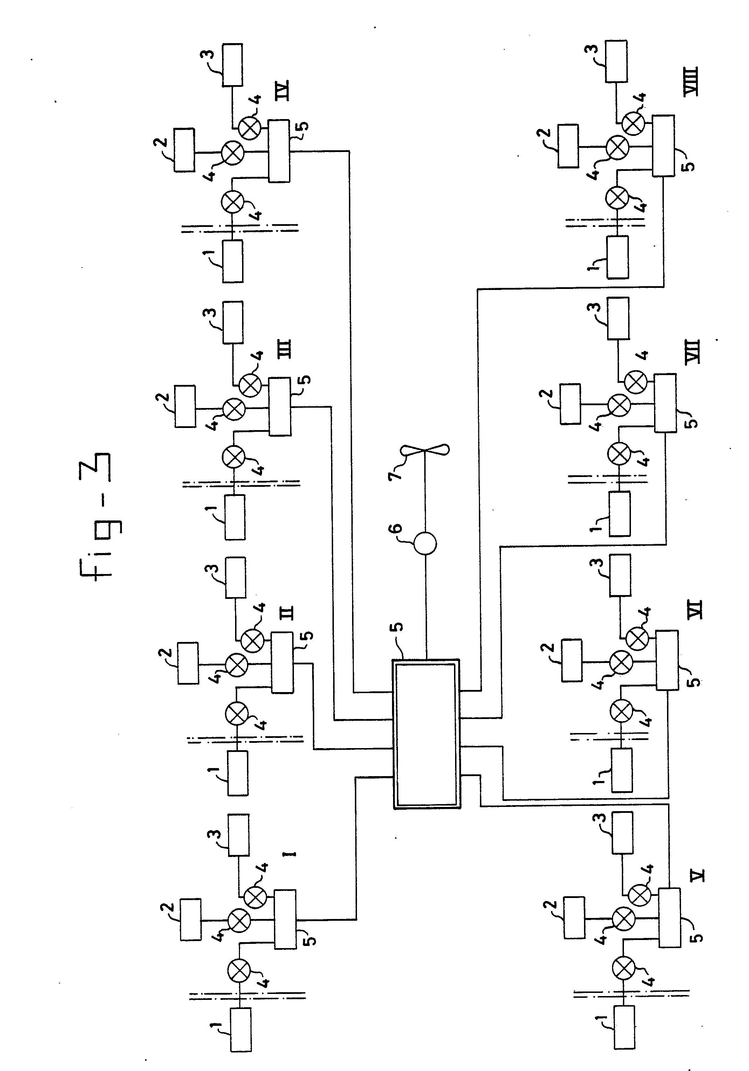

A number of rooms I to III can also be served by one central fan, as shown in Fig. 3. In the case of such a device the fan may be less accurately attuned to the separate rooms, but the advantage is the lower cost (in view of the single fan).

## Claims

1. Process for regulating the air conditioning in a room of a building, such as in one or more rooms of a home, office, storeroom and the like, by means of a device which can condition the air in the room(s) in question, and the switching on and off of which is controlled by a sensor which measures the condition in the room and makes the device switch on when a limit value of the condition, for example the relative humidity, is exceeded, and which switches off the device as soon as the condition in question has fallen to a settable value below the above-mentioned limit value, characterized in that the device is switched on, switched off or adjusted by determining the limit value from:

1. measuring both the inside temperature $(T_1)$ and the outside temperature $(T_o)$;

2. determining the temperature $(T_{k1})$ on the inside of a cold bridge of the room from the inside temperature $(T_1)$, the outside temperature $(T_o)$, and the heat conducting properties of this cold bridge;

3. determining the maximum vapour concentration ($C_{1i}$) at which condensation still only just does not occur at the measured temperature ($T_{k1}$) on the inside of the cold bridge;

4. determining the maximum vapour concentration ($C_{12}$) at which condensation still only just does not occur at the measured inside temperature ($T_1$);

5. calculating the limit values ($R_{v1}$) for the relative humidity in the room at which no condensation yet forms on the cold bridge by means of the ratio between the maximum vapour concentrations: $C_{1i}$ and ($C_{12}$) according to

$$R_{v1} = \frac{C_{11}}{C_{12}}$$

6. and comparing this calculated value for the limit value with the relative humidity measured by the sensor in the room for control of the device.

2. Process according to Claim 1, characterized in that the measured values of the inside and outside temperature and the relative humidity are fed into a microprocessor which controls a fan.

3. Process according to Claim 2 for regulating the air conditioning in a number of rooms of a building, characterized in that the temperature and the relative humidity are measured in each room, and each room also has a fan, while the measured values are fed to a central microprocessor which controls each fan separately depending on the temperature and relative humidity measured in the appropriate room, and on the outside temperature.

4. Process according to Claim 1 for regulating the air conditioning in a number of rooms of a building, characterized in that the temperature and the relative humidity are measured in each room, and the measured values are always fed to separate microprocessors which are linked to a central microprocessor controlling a fan, which is connected to all rooms.

5. Process according to Claim 1 for regulating the air conditioning in a greenhouse, characterized in that the measured values are fed into a microprocessor which controls the regulating device of a water supply unit.

fig-1

# fig-2

# Fig-3

EP 0 313 169 A1

European Patent Office

**EUROPEAN SEARCH REPORT**

Application Number

EP    88 20 2341

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | AU-A-532597 (UNISEARCH LIMITED)<br>* page 3, line 9 - line 27; figure 1 *<br>--- | 1 | G05D22/02<br>F24F11/00 |
| A | US-A-4408660 (SUTOH)<br>* column 1, line 35 - line 68; figures 1-4 *<br>----- | 1 | |

| | | | TECHNICAL FIELDS SEARCHED (Int. Cl.4) |
|---|---|---|---|
| | | | F24F<br>G05D |

The present search report has been drawn up for all claims

| Place of search | Date of completion of the search | Examiner |
|---|---|---|
| THE HAGUE | 6 JANUARY 1989 | GOETZ P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                  

& : member of the same patent family, corresponding document

EPO FORM 1503 03.82 (P0401)